# EUROPEAN PATENT SPECIFICATION

(11) **EP 4 332 413 B1**
(45) Date of publication and mention of the grant of the patent: **25.11.2026**
(21) Application number: 23194393.7
(22) Date of filing: 30.08.2023
(51) Int. Cl.: B22F 5/00, B22F 10/28, B22F 10/40, F16J 3/04, B33Y 80/00, F16J 15/52

(54) **ADDITIVELY MANUFACTURED BELLOWS**
GENERATIV GEFERTIGTER BALG
SOUFFLET FABRIQUÉ DE MANIÈRE ADDITIVE

(30) Priority: 30.08.2022 US 202263373961 P
(43) Date of publication of application: 06.03.2024
(73) Proprietor: Relativity Space, Inc., Long Beach, CA 90815 (US)
(72) Inventor: Wimer, Anthony, Long Beach, 90815 (US); Jones, Lewis, Long Beach, 90815 (US); Christiansen, Daniel, Long Beach, 90815 (US); Jander, Filip, Long Beach, 90815 (US)
(74) Representative: Wellburn, Daniel

(56) References cited:
- EP-A1- 0 198 734
- DE-A1- 102008 061 947
- FR-A1- 3 046 447
- US-A- 4 235 427
- US-A- 6 042 092

## Description

### TECHNICAL FIELD

The present disclosure relates to bellows. More specifically, embodiments of the present disclosure relate to bellows geometry and methods of manufacturing bellows geometry.

### BACKGROUND

Expansion joints and bellows are used to create structural compliance and potential energy storage in fluid and mechanical systems. An expansion joint is any device containing one or more bellows used to absorb dimensional changes. A bellows is a flexible element of an expansion joint with one or more convolutions. Bellows compliance can reduce stress in mechanical systems or store energy in piston driven systems such as hydraulic actuators or similar moving mechanical assemblies. In addition, bellows are used in various applications to provide compliance and movement between rigid leak-tight ducts or lines that are used to transfer gases or liquids.

FR 3 046 447 A1 describes a bellows which can be produced by 3D printing and which comprises: a first and a second end, and a side wall comprising at least two outer cone truncates and at least two inner cone truncates intercalated. The side wall also comprises between an outer cone truncate and an inner cone truncate, a first junction zone, and between an inner cone truncate and an outer cone truncate, a second junction zone.

US 6 042 092 A describes a bellows cylinder provided with a bellows part at least at a part is formed so that a first surface of a cylinder wall of the above bellows part is tilted to the radial direction of the bellows part and is directed to one end of the bellows part with a ridge as a boundary; a second surface is parallelized to the radial direction of the bellows part and is directed to the other end of the bellows part or is tilted on the side of the first surface; the second surface is pressed inside the first surface when the bellows part is compressed.

EP 0 198 734 A1 describes a protective bellows for a shock absorber rod in particular for a motor vehicle, of the type comprising at least two concentric corrugated elements of different diameters which are connected together by an intermediate spacer member characterised in that the spacer member is a rotationally symmetrical diaphragm which is capable of being turned over from its production shape to its functional position in which it is disposed substantially at the centre of the available space between the corrugated elements which in the condition of extension of the bellows are in axial relationship, said spacer member being fixed by means of one of its ends to the closest turn of the element of large diameter by way of a thin zone which is normal to the axis of the bellows, with which it forms a curve which is curved inwardly followed by a reversed inflection portion which connects it to a central tubula r body of the spacer member, the other end thereof being connected by a curve to the end turn of the small-diameter element whose free end is fixed with respect to the rod, in such a way that when the elements are closed up with their turns touching, the total height of the bellows substantially corresponds to that of the spacer member.

DE 10 2008 061947 A1 describes a bellows that has circular folds provided around a longitudinal axis. The folds are formed of multiple folding side pieces arranged one behind another along the longitudinal axis. The folds are connected with each other at an end. Ends of the folding side pieces are arranged in an inner and outer lying manner in reference to the longitudinal axis, respectively. The inner and outer lying ends are arranged at an inner vertex path and an outer vertex path, respectively. The vertex paths are arranged along a screw path that is wound around the longitudinal axis.

US 4 235 427 A describes a plastic spring element defined by inner and outer convolutions of different thickness defined by radii and with tapered walls extending therebetween.

### SUMMARY

The present disclosure can comprise one or more of the following features and combinations thereof. The descriptions herein represent non-limiting invention embodiments.

According to an embodiment of the present disclosure, a bellows assembly can include a first connecting portion, a second connecting portion, and at least one convolution portion. In some embodiments, the first connecting portion is configured to connect to a first component. In some embodiments, the second connecting portion configured to connect to a second component. In all embodiments, the at least one convolution portion is between the first connecting portion and the second connecting portion and is configured to provide compliance such that the first connecting portion moves relative to the second connecting portion.

In some embodiments, the at least one convolution portion includes a first end, a second end, a longitudinal axis, a first compliant portion, a second compliant portion, and a third compliant portion. In some embodiments, the first end is disposed toward the first connecting portion. In some embodiments, the second end is spaced apart from the first end, toward the second connecting portion. In some embodiments, the longitudinal axis extends from the first end to the second end and a lateral axis is perpendicular to the longitudinal axis. In some embodiments, the first compliant portion extends outwardly away from the first end at a first angle relative to the lateral axis. In some embodiments, the third compliant portion extends outwardly away from the second end at a second angle relative to the lateral axis, and the second compliant portion is formed between and coupling to distal ends of the first and third compliant portions. In some embodiments, the first angle and the second angle are between about 30 degrees to 80 degrees such that the first compliant portion and the third compliant portion form inward extending cone shapes.

In some embodiments, the first angle and the second angle are equal such that the first compliant portion is parallel to the third compliant portion. In some embodiments, the first angle is different from the second angle such that the first compliant portion and the third compliant portion converge toward the first end and the second end.

In some embodiments, a starter portion extends away from the second compliant portion along the longitudinal axis and is configured to provide a starting point for additively manufacturing the at least one convolution portion. In some embodiments, the first connecting portion is integrally formed with the first component and the second connecting portion is integrally formed with the second component, such that the first component, the first connecting portion, the second connecting portion, and the second component are a single piece structure. A single piece structure means that the structure is a single piece of material and is not multiple pieces of material joined by one or more weld joints, solder joints, or the like. A conventionally manufactured bellows is a multi-piece structure and is not a single piece structure under this definition. By contrast, an additively manufactured structure, formed from deposition of layers of a material, is a single piece structure under this definition.

In some embodiments, the first connecting portion and the second connecting portion move relative to one another in at least one of an axial movement perpendicular to the longitudinal axis, compression or extension along the longitudinal axis, and a gimballing tilting angle relative to the longitudinal axis.

In some embodiments, the at least one convolution portion comprises at least four convolution portions. In some embodiments, the second compliant portion is located below the first end and the second end. In some embodiments, the at least one convolution portion has a wall thickness of about 0.5 millimeters.

According to another embodiment of the present disclosure, a bellows assembly includes a first connecting portion, a second connecting portion, and at least one convolution portion formed between the first connecting portion and the second connecting portion and configured to provide compliance such that the first connecting portion moves relative to the second connecting portion. In some embodiments the at least one convolution portion includes a first end, a second end, a longitudinal axis extending from the first end to the second end, a lateral axis perpendicular to the longitudinal axis, a first compliant portion, a first tube portion, a second tube portion, a second compliant portion, a third tube portion, and a third compliant portion. The first tube portion, the second tube portion and the third tube portion are axially aligned along the longitudinal axis. In some embodiments, the first compliant portion extends outwardly away from the first end at a first angle relative to the lateral axis. In some embodiments, the first tube portion extends away from the first compliant portion end. In some embodiments, the second tube portion is radially spaced apart from the first tube portion. In some embodiments, the second compliant portion is formed between and couples the first and second tube portions. In some embodiments, the third tube portion is radially spaced apart from the second tube portion and extends away from the second end approximately parallel to the longitudinal axis. In some embodiments, the third compliant portion is formed between and couples the second and third tube portions.

In some embodiments, the first angle is between about 30 degrees to 80 degrees such that the first compliant portion forms inward extending cone. In some embodiments, at least two of the first, second, and third tube portions are axially aligned along the longitudinal axis. In some embodiments, the first tube portion and the second tube portion are radially spaced apart by a first distance, and the second tube portion and the third tube portion are radially spaced apart by a second distance, and the first distance is equal to the second distance.

In some embodiments, the at least one convolution portion is at least four convolution portions. In some embodiments, the at least one convolution portion has a wall thickness of about 0.5 millimeters. In some embodiments, the at least one convolution further includes a fourth tube portion, a fourth compliant portion, a fifth tube portion, and a fifth compliant portion. In some embodiments, the fourth tube portion is radially spaced apart from the third tube portion. In some embodiments, the fourth compliant portion is formed between and couples the fourth tube portion to the second end and third tube portion. In some embodiments, the fifth tube portion is radially spaced apart from the fourth tube portion and extends away from a third end. In some embodiments, the fifth compliant portion is formed between and couples the fourth and fifth tube portions.

According to another embodiment of the present disclosure, a bellows assembly includes a first connecting portion, a second connecting portion, and a helix convolution portion formed between the first connecting portion and the second connecting portion and configured to provide compliance such that the first connecting portion moves relative to the second connecting portion. In some embodiments, the second connecting portion is spaced apart from the first connecting portion along a longitudinal axis. In some embodiments, the helix convolution portion extends circumferentially around and along the longitudinal axis and has a first section with a first angle relative to a lateral axis that is perpendicular to the longitudinal axis.

In some embodiments, the helix convolution comprises a second section extending from the first section. In some embodiments, the second section has a second angle relative to the lateral axis, wherein the second angle is greater than the first angle. In some embodiments, the first section has a first height along the longitudinal axis, the second section has a second height along the longitudinal axis, and the first height is greater than the second height. In some embodiments, the first angle is between about 10 degrees and about 30 degrees, and the second angle is between about 30 degrees and about 60 degrees.

Further features and advantages, as well as the structure and operation of various embodiments, are described in detail below with reference to the accompanying drawings. It is noted that the specific embodiments described herein are not intended to be limiting. Such embodiments are presented herein for illustrative purposes only. Additional embodiments will be apparent to persons skilled in the relevant art based on the teachings contained herein.

### BRIEF DESCRIPTION OF THE DRAWINGS

The accompanying drawings, which are incorporated herein and form a part of the specification, illustrate embodiments of the present disclosure and, together with the description, further explain the principles of the disclosure and to enable a person skilled in the pertinent art to make and use the disclosure.
FIG. 1 illustrates a block diagram of an example rocket engine showing various locations where bellows can be located.
FIG. 2 illustrates a side view of a conventional known bellows design made by conventional methods.
FIG. 3 illustrates a cross-sectional side view of a first bellows configuration, according to an embodiment of the present disclosure.
FIG. 4 illustrates a cross-sectional side view of the first bellows configuration with alternate geometry features for printability and stiffness, according to an embodiment of the present disclosure.
FIG. 5 illustrate a detailed view of the convolution shown in FIG. 4, according to an embodiment of the present disclosure.
FIG. 6 illustrates a cross-sectional side view of a second bellows configuration, according to an embodiment of the present disclosure.
FIG. 7 illustrates a cross-sectional side view of the second bellows configuration with alternate geometry features for printability and stiffness, according to an embodiment of the present disclosure.
FIG. 8 illustrate a detailed view of the convolution shown in FIG. 7, according to an embodiment of the present disclosure.
FIG. 9 illustrates a cross-sectional side view of the first bellows configuration showing manufacturing features to support the bellows, according to an embodiment of the present disclosure.
FIG. 10 illustrates a cross-sectional side view of a third bellows configuration, according to an embodiment of the present disclosure.
FIG. 11 illustrates a cross-sectional side view of a fourth bellows configuration, according to an embodiment of the present disclosure.
FIG. 12 illustrates a cross-sectional side view of a fifth bellows configuration, according to an embodiment of the present disclosure.
FIG. 13 illustrates a perspective view of the fifth bellows configuration with a steeper helix angle of the plurality of helixes, according to an embodiment of the present disclosure.
FIG. 14 illustrates a perspective view of a sixth bellows configuration showing a helix convolution, according to an embodiment of the present disclosure.
FIG. 15 illustrates a top perspective view of the sixth bellows configuration of FIG. 14, according to an embodiment of the present disclosure.
FIG. 16 illustrates a graphical view of an example geometry of the sixth bellows configuration of FIG. 14, according to an embodiment of the present disclosure.

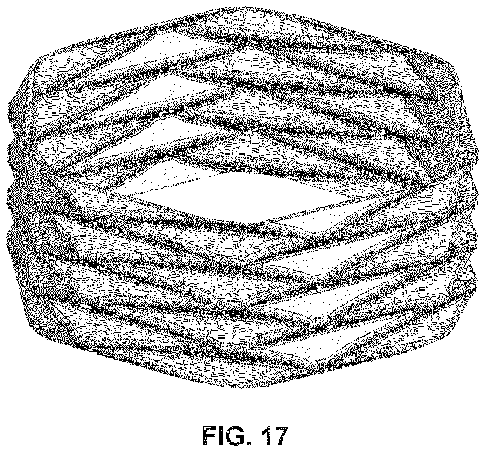

FIG. 17 illustrates a perspective view of a seventh bellows configuration, according to an embodiment of the present disclosure.

### DETAILED DESCRIPTION

Standards for expansion joint design, testing, and production make traditional methods for manufacturing bellows low risk and the logical choice of aerospace companies and similarly risk adverse industries. The inventors realized and discovered that traditional manufacturing methods cause long lead times for delivering bellows components due to expensive and complicated tooling. They further realized and discovered that traditional tooling cannot be easily changed or adapted to modify bellows geometry, making quick design modifications of the bellows for particular applications difficult. The present disclosure describes inventive bellows geometries and methods of manufacturing bellows geometries that can leverage additive manufacturing to solve these and other problems that the inventors discovered and overcame. Embodiments of the present disclosure will be described with reference to the accompanying drawings.

In some embodiments of the present disclosure, the terms "about" and "substantially" can indicate a value of a given quantity that varies within 20% of the value (e.g., ±1 %, ±2%, ±3%, ±4%, ±5%, ±10%, ±20% of the value). These values are merely examples and are not intended to be limiting. The terms "about" and "substantially" can refer to a percentage of the values as interpreted by those skilled in relevant art in light of the teachings herein.

Further, spatially relative terms, such as "beneath," "below," "lower," "above," "upper," and the like, may be used herein for ease of description to describe one element or feature's relationship to another element or feature as illustrated in the figures. The spatially relative terms are intended to encompass different orientations of the device in use or operation in addition to the orientation depicted in the figures. The apparatus can be otherwise oriented (rotated 90 degrees or at other orientations) and the spatially relative descriptors used herein can likewise be interpreted accordingly.

Additive manufacturing, such as Laser Powder Bed Fusion (LPBF) allows a user to create a complex additively manufactured object from a CAD model. The CAD model can be input into a 3-D printer, and the printer can form parts with the user's desired shapes. The additive manufactured parts are formed by building up structural layers and fusing them together. To start the process, the print chamber is filled with inert gas and heated to an optimal printing temperature. A thin layer of a powdered material is applied to the build platform and a focused energy source (e.g., a fiber optic laser) scans the cross-section of the part and melts the metal particles together. When the first layer is finished, the platform can move downward, allowing the next layer of powder to be added, melted, and fused to the first layer. The process is repeated until the final part is obtained. The powdered raw material can be polymers or metals such as stainless steel, cobalt-chromium, aluminum, titanium, Inconel, or other suitable metals. LPBF additive manufacturing allows 3-D printed components to be made with tight tolerance and thin walls. For example, geometries of the present disclosure can have wall thicknesses between about 0.3 mm to about 2 mm.

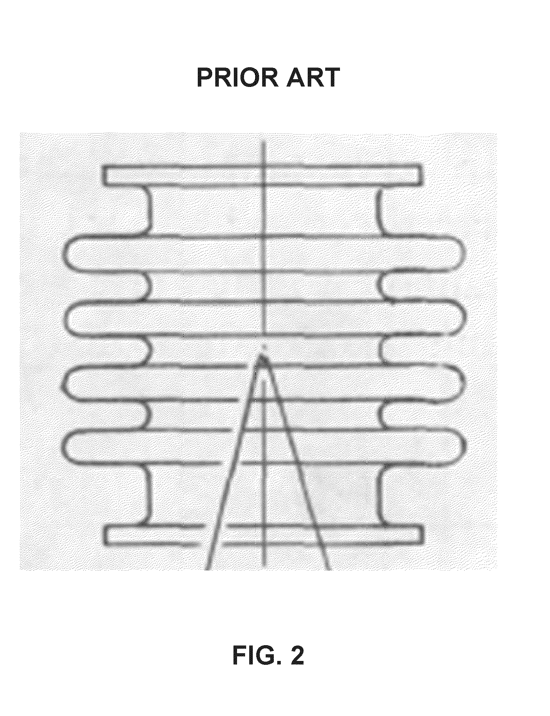

The inventors realized that additive manufacturing can be advantageous because it allows for production of a wide array of 3-D shapes that would be impossible to replicate using conventional methods. Conventional forming of bellows assemblies requires that all features of the bellows have line-of-sight with the forming tool. Generally, this limits bellows assemblies to perpendicular convolutions relative to a longitudinal axis of the bellows, and other simple shapes, as shown, for example, in FIG. 2. In addition, because additive manufacturing does not require fixed forming tools, iterations of bellows designs can be quickly produced for either testing or customization for different applications. A new CAD model can be input to the 3-D printer to produce a new bellows assembly with varying shapes, wall thicknesses, or other features to optimize the bellows for its application.

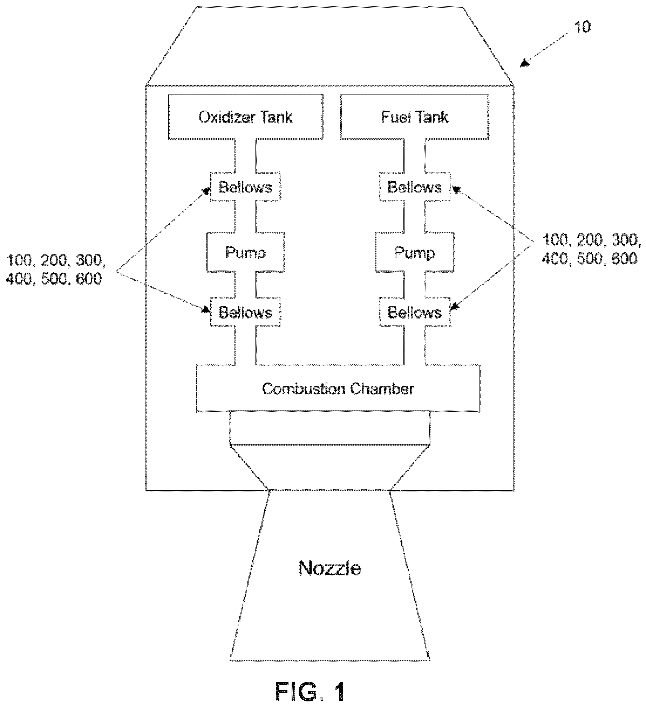

Propulsion devices use bellows to transfer liquids and gases between adjacent ducts and lines especially in arrangements that can translate or rotate relative to one another. Propulsion devices include, for example, gas turbine engines, rocket engines, and other similar applications. In some embodiments, multiple bellows can be used on a propulsion device with different requirements, as shown, for example, in FIG. 1. For example, between adjacent joining components, the bellows can allow for axial or translational movement, expansion, gimballing to allow tilt movement in any direction, and/or thrust vector control. In addition, the bellows can transfer liquid or gases at high or low pressures or act as a spring to store potential energy.

Compared with conventional bellows assemblies, embodiments of the present disclosure provide optimized bellows geometries for propulsion devices. The inventors realized and discovered that additive manufactured parts according to embodiments of the present invention have greater design freedom than formed or welded parts and therefore allow greater design iteration, short lead times, and fewer parts for a particular application. They further realized and discovered that, when manufacturing embodiments of the present invention, ingredients in the raw material, e.g., a metallic powder, can be modified in a controlled fashion to alter properties of the coupling as desired, while still using the same 3-D printer.

### Example Bellows Assembly

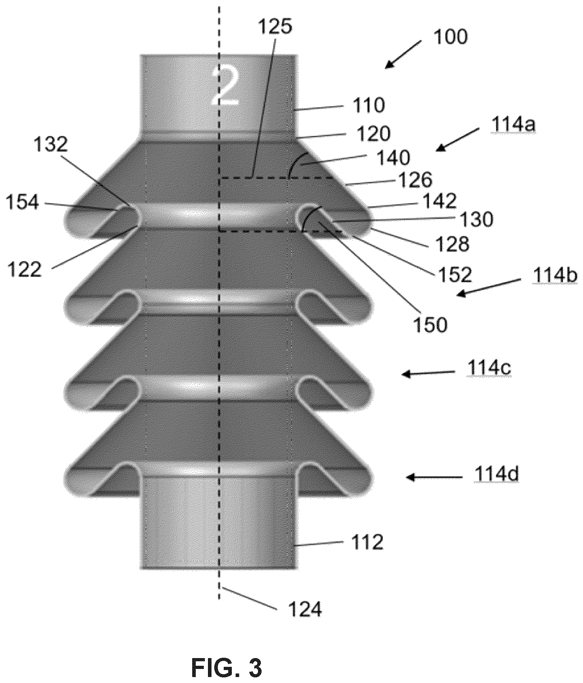

FIGS. 3-5 illustrate a cross-sectional side view of bellows assembly 100, according to at least one embodiment. Bellows assembly 100 can be coupled to adjacent components in propulsion device 10. Bellows assembly 100 includes first connecting portion 110, second connecting portion 112, and at least one convolution 114a. As shown in FIG. 3, for example, bellows assembly 100 includes four convolutions 114a,b,c,d with identical geometries stacked on top of each other along a longitudinal axis 124. In some embodiments, bellows assembly 100 can include two, three, or more than four convolutions depending on the flexibility requirements and space constraints of the application the bellows is assembled into.

First connecting portion 110 extends around the longitudinal axis 124 to form a tube as shown, for example in FIG. 3. In some embodiments, first connecting portion 110 can be additively manufactured to have a different cross-sectional shape such as a square, oval, or other polygonal shape. First connecting portion 110 can be coupled to an adjacent component, such as an exhaust duct, or fuel line, in propulsion device 10 (not shown in FIG. 3). In some embodiments, first connecting portion 110 can be coupled to the adjacent component with a flange, or by welding, fusing, or other suitable coupling method. In some embodiments, first connecting portion 110 can be integral with the adjacent component to reduce overall part count in the propulsion device 10 (not shown).

Second connecting portion 112 extends around the longitudinal axis 124 to form a tube as shown, for example, in FIG. 3. In some embodiment, second connecting portion 112 can be additively manufactured to have a different cross-sectional shape such as a square, oval, or other polygonal shape. Second connecting portion 112 can be coupled to an adjacent component, such as an exhaust duct, or fuel line, in propulsion device 10 (not shown in FIG. 3). In some embodiments, second connecting portion 112 can be coupled to the adjacent component with a flange, or by welding, fusing, or other suitable coupling method. In some embodiments, second connecting portion 112 can be integral with the adjacent component to reduce overall part count in the propulsion device 10 (not shown).

Convolution 114a extends between first connecting portion 110 and second connecting portion 112 along longitudinal axis 124. Convolution 114a can have a wall thickness between about 0.3 mm and 5 mm. In some embodiments, convolution 114a can have a wall thickness of about 0.5 mm. Convolution 114a is configured to be flexible such that first connecting portion 110 and second connecting portion 112 can move relative to one another. In some embodiments, convolution 114a expands and contracts along the longitudinal axis 124 so that first connecting member 110 and second connecting portion 112 move toward and away from each other. In some embodiments, convolution 114a and others like it, viz. 114b, 114c, 144d, allow first connecting portion 110 and second connecting portion 112 to translate radially relative to each other, perpendicular to the longitudinal axis 124. In some embodiments, convolution 114a allows for angular rotation of first connecting portion 110 relative to second connecting portion 112 such that bellows assembly 100 can gimbal and move or tilt freely in any direction.

Convolution 114a can include first end 120, second end 122, first compliant portion 126, second compliant portion 128, third compliant portion 130, and fourth compliant portion 132, as shown, for example, in FIG. 3. First end 120 connects to first connecting portion 110. Second end 122 connects to second connecting portion 112, or to a first end of an adjacent convolution 114b where bellows assembly 100 includes more than one convolution 114a.

First compliant portion 126 extends outwardly away from first end 120 to form an inward cone shape. The inventors realized and discovered that the inward cone shape of first compliant portion 126 and associated hoop stresses allow for a stable additive manufacturing process of bellows assembly 100. First compliant portion 126 extends at first angle 140 relative to a lateral axis 125, where the lateral axis 125 is perpendicular to the longitudinal axis 124. First angle 140 can be between about 30 degrees to about 80 degrees. Second compliant portion 128 extends from a distal end 142 of first compliant portion 126 and couples to a distal end 152 of third compliant portion 130. Third compliant portion 130 extends away from second compliant portion 128 toward second end 122 and forms an inward cone shape. The inventors realized and discovered that the inward cone shape of third compliant portion 130 and associated hoop stresses allow for a stable additive manufacturing of bellows assembly 100. Third compliant portion 130 extends at second angle 150 relative to the lateral axis 125. Second angle 150 can be between about 30 degrees to about 80 degrees. In the illustrative embodiment shown in FIG. 3, first angle 140 and second angle 150 are equal such that first compliant portion 126 and third compliant portion 130 are spaced apart and parallel to one another. Fourth compliant portion 132 extends between and couples second end 122 and proximal end 154 of third compliant portion 130 together.

In the embodiment in FIG. 3, second end 122 is axially located between second compliant portion 128 and first end 120 such that second compliant portion 128 overlaps an adjacent convolution 114 in bellows assembly 100. Such overlapping of convolutions 114 allows for improved packaging of bellows assembly 100 relative to conventional bellows; for example, more convolutions 114 can be included in bellows assembly 100 per unit length along the longitudinal axis 124 than can be included in conventional bellows. The inventors discovered that bellows assembly 100 can have a reduced radial envelope area relative to a conventional bellows while still providing similar flexibility in axial and radial directions, and providing similar flexibility in tilting gimbal angles relative to the longitudinal axis.

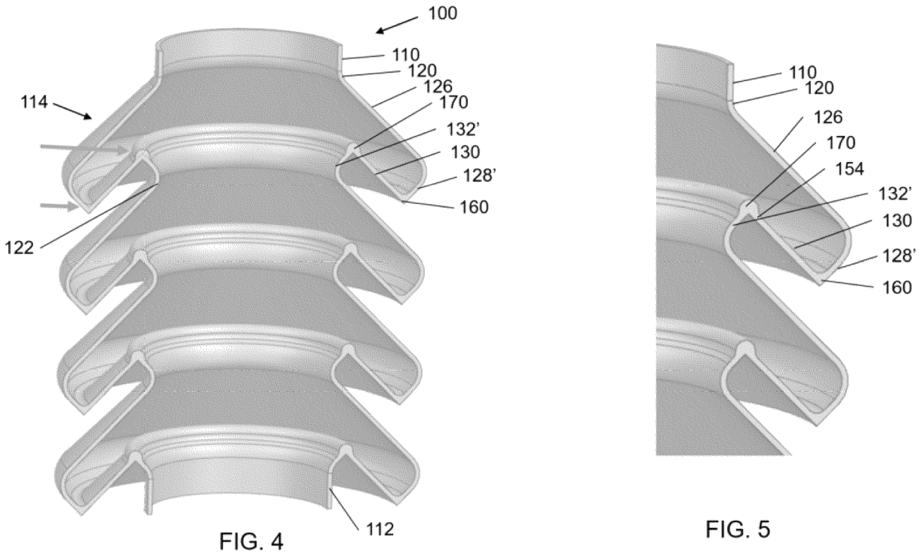

In some embodiments, second compliant portion 128 can extend between first and third compliant portions 126, 130 with a single smooth radius, as shown, for example, in FIG. 3. As illustratively shown in FIGS. 4 and 5, the inventors discovered that extending second compliant portion 128' between first and third compliant portions 126, 130 with a compound radii curve can improve printing stability of the first or third compliant portions 126, 130 in an additive manufacturing process. Second compliant portion 128' can include starting portion 160 that extends away from second compliant portion 128' approximately parallel with longitudinal axis 124. The inventors discovered that starting portion 160 improves printing yield by providing a feature to start printing convolution 114. Starting portion 160 can allow convolution 114 to be printed without support members 180. Starting portion 160 can have a sharp angle, approximately about 90 degrees.

In some embodiments, fourth compliant portion 132 can extend between second compliant portion 128 and second end 122 with a single smooth radius, as shown, for example, in FIG. 3. As illustratively shown in FIGS. 4 and 5, fourth compliant portion 132' can extend at approximately 90 degrees from third compliant portion 130 and couple with second end 122 with a smooth radius. The inventors discovered that the foregoing configuration of fourth compliant portion 132' provides high printing stability of third compliant portion 130 in an additive manufacturing process. Fourth compliant portion 132' can include stiffening portion 170 that extends away from fourth compliant portion 132' approximately parallel with longitudinal axis 124. Stiffening portion 170 can locally stiffen convolution 114a such that compliance of convolution 114a comes from first and third compliant portions 126, 130. Stiffening portion 170 can provide additional material in fourth compliant portion 132' to accommodate stresses in convolution 114a due to bending and movement of first connecting portion 110 relative to second connecting portion 112.

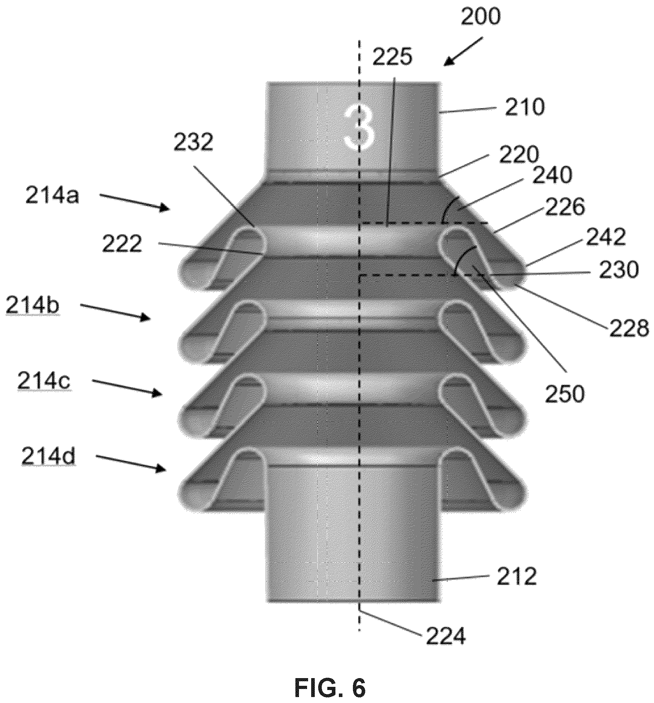

FIGS. 6-8 provide another embodiment of a bellows assembly 200 in accordance with the present disclosure and show a different convolution 214 configuration. Bellows assembly 200 is substantially similar to bellows assembly 100 shown in FIGS. 3-5 and described herein. Accordingly, similar reference numbers in the 200 series indicate commonalities between bellows assembly 200 and bellows assembly 100. The description of bellows assembly 100 above is incorporated by reference to apply to bellows assembly 200, except in instances when it conflicts with the specific description and the drawings of bellows assembly 200.

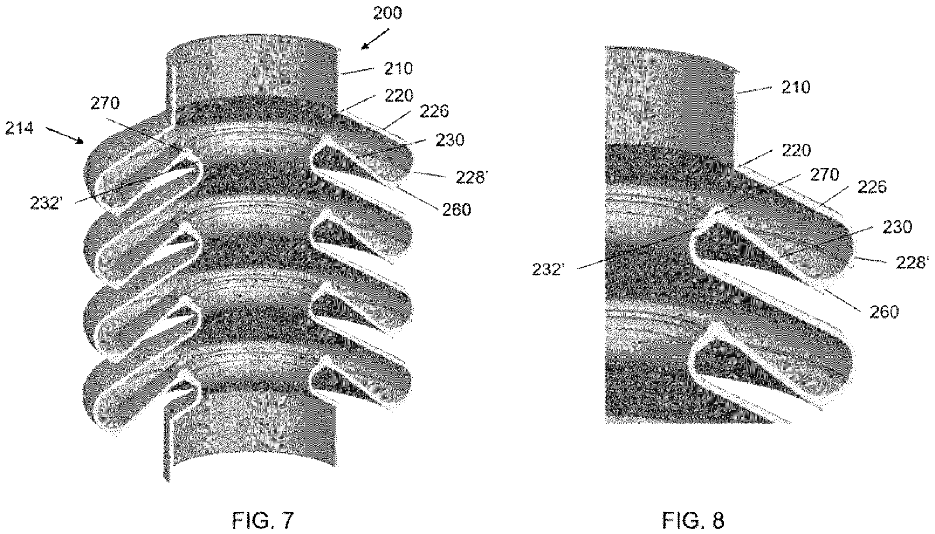

Bellows assembly 200 includes first connecting portion 210, second connecting portion 212, and at least one convolution 214. As shown in FIGS. 6 and 7, for example, bellows assembly 200 can include four convolutions 214 with identical geometries stacked on top of each other along a longitudinal axis 224, but more or fewer convolutions 214 can also be possible. First connecting portion 210 extends around the longitudinal axis 124 to form a tube. Second connecting portion 212 extends around the longitudinal axis 224 to form a tube.

Convolution 214 extends between first connecting portion 210 and second connecting portion 212 along longitudinal axis 224 as shown, for example in FIGS. 6 and 7. Convolution 214 is configured to be flexible such that first connecting portion 210 and second connecting portion 212 can move relative to one another. Convolution 214 can include first end 220, second end 222, first compliant portion 226, second compliant portion 228, third compliant portion 230, and fourth compliant portion 232. First end 220 connects to first connecting portion 210. Second end 222 connects to second connecting portion 212, or to a first end of an adjacent convolution where bellows assembly 200 includes more than one convolution 214.

First compliant portion 226 extends outwardly away from first end 220 to form an inward cone shape. First compliant portion 226 extends at first angle 240 relative to a lateral axis 225, where the lateral axis 225 is perpendicular to longitudinal axis 224. First angle 240 can be between about 30 degrees to about 80 degrees relative to the lateral axis 225. Second compliant portion 228 extends from a distal end 242 of first compliant portion 226 and couples to a distal end 252 of third compliant portion 230. Third compliant portion 230 extends away from second compliant portion 228 toward second end 222 and forms an inward cone shape. Third compliant portion 230 extends at second angle 250 relative to the lateral axis 225. Second angle 250 can be between about 30 degrees to about 80 degrees relative to the lateral axis 225. In the illustrative embodiment shown in FIG. 6, first angle 240 is different from second angle 250. In some embodiments, first angle 240 is greater than second angle 250 such that distal ends 242, 252 are spaced further apart than proximal end 254 of third compliant portion 230 and first compliant portion 126. In some embodiments, first angle 240 can be less than second angle 250. Fourth compliant portion 232 extends between and couples second end 222 and proximal end 254 of second compliant portion 228 together.

In the illustrative embodiment in FIG. 6, second end 222 is axially located between second compliant portion 228 and first end 220 such that second compliant portion 228 overlaps an adjacent convolution 214 in bellows assembly 200. The inventors realized and discovered that such overlapping of convolutions 214 allows for improved packaging of bellows assembly 200 relative to conventional bellows. In addition, the inventors realized and discovered that first angle 240 and second angle 250 of convolutions 214 allows for increased flexibility of bellows assembly 200 compared to bellows assembly 100. They also realized and discovered that bellows assembly 200 can have increased convolutions 214 per unit length compared to bellows assembly 100, thereby providing improved packaging of the bellows assembly 200 compared to bellows 100.

In some embodiments, second compliant portion 228 can extend between first and third compliant portions 226, 230 with a single smooth radius, as shown, for example, in FIG. 6. As illustratively shown in FIGS. 7 and 8, second compliant portion 228' can extend between first and third compliant portions 226, 230 with a compound radii curve to improve printing stability convolution 214. Second compliant portion 228' can include starting portion 260 that extends away from second compliant portion 228' approximately parallel with longitudinal axis 224. Starting portion 260 can have a sharp angle, approximately about 90 degrees.

In some embodiments, fourth compliant portion 232 can extend between third compliant portion 230 and second end 222 with a single smooth radius, as shown, for example, in FIG. 6. As illustratively shown in FIGS. 7 and 8, fourth compliant portion 232' can extend at approximately 90 degrees from third compliant portion 230 and couple with second end 222 with a smooth radius to provide high printing stability of convolution 214. Fourth compliant portion 232' can include stiffening portion 270 that extends away from fourth compliant portion 232' approximately parallel with longitudinal axis 224. Stiffening portion 270 can locally stiffen convolution 214 such that compliance of convolution 214 comes from first and third compliant portions 226, 230.

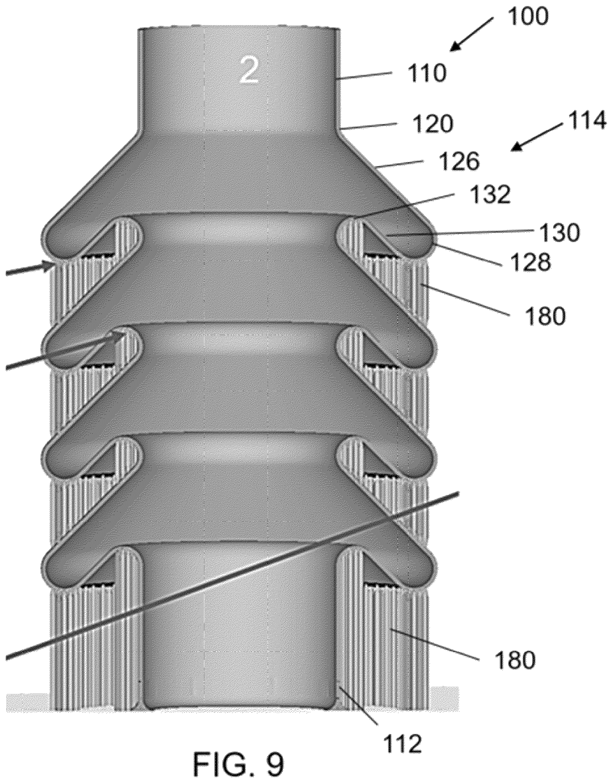

During manufacture of bellows assembly 100 or bellows assembly 200, structural members 180, as shown, for example, in FIG. 9, can be used to improve printing yields. Structural members 180 provide support to convolution 114 during printing and can be snapped off or cut from convolution 114 after printing.

### Example Bellows Assembly with double overlapping convolutions

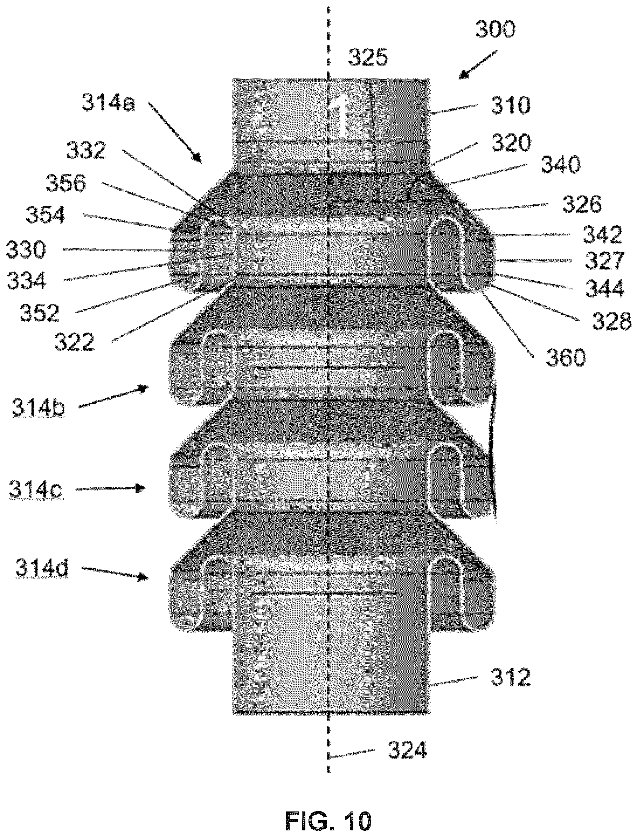

Another embodiment of a bellows assembly 300 in accordance with the present disclosure is shown in FIG. 10 showing a different convolution 314 configuration. Bellows assembly 300 is substantially similar to bellows assembly 100 shown in FIGS. 3-5 and described herein. Accordingly, similar reference numbers in the 300 series indicate commonalities between bellows assembly 300 and bellows assembly 100. The description of bellows assembly 100 is incorporated by reference to apply to bellows assembly 300, except in instances when it conflicts with the specific description and the drawings of bellows assembly 300.

FIG. 10 illustrates a cross-sectional side view of bellows assembly 300, according to embodiments. Bellows assembly 300 can be coupled to adjacent components in propulsion device 10. Bellows assembly 300 includes first connecting portion 310, second connecting portion 312, and at least one convolution 314. As shown in FIG. 10, for example, bellows assembly 300 includes four convolutions 314 with identical geometries stacked on top of each other along a longitudinal axis 324, but more or fewer convolutions 314 can also be possible. First connecting portion 310 extends around the longitudinal axis 324 to form a tube. Second connecting portion 312 extends around the longitudinal axis 324 to form a tube.

Convolution 314 extends between first connecting portion 310 and second connecting portion 312 along longitudinal axis 324 as shown, for example in FIG. 10. Convolution 314 is configured to be flexible such that first connecting portion 310 and second connecting portion 312 can move relative to one another. Convolution 314 can include first end 320, second end 322, first compliant portion 326, first tube portion 327, second compliant portion 328, second tube portion 330, third compliant portion 332, and third tube portion 334. First end 320 connects to first connecting portion 310. Second end 322 connects to second connecting portion 312, or to a first end of an adjacent convolution where bellows assembly 300 includes more than one convolution 314.

First compliant portion 326 extends outwardly away from first end 320 to form an inward cone shape. First compliant portion 326 extends at first angle 340 relative to a lateral axis 325, where the lateral axis 325 is perpendicular to the longitudinal axis 324. First angle 340 can be between about 30 degrees to about 80 degrees relative to the lateral axis 325. First tube portion 327 extends away from a distal end 342 of first compliant portion 326 approximately parallel to the longitudinal axis 324, such that first tube portion 327 forms a tube. Second compliant portion 328 extends from a distal end 344 of first tube portion 327 and couples to a distal end 352 of second tube portion 330. Second tube portion 330 extends away from second compliant portion 328 aprroximately parallel to longitudinal axis 324, such that second tube portion 330 forms a tube. Third compliant portion 332 extends from a proximal end 354 of second tube portion 330 and couples to a proximal end 356 of third tube portion 334. Third tube portion 334 extends away from third compliant portion 332 approximately parallel to longitudinal axis 324, such that third tube portion 334 forms a tube. Third tube portion 332 extends to and couples with second end 322.

In the illustrative embodiment in FIG. 10, first tube portion 327, second tube portion 330, and third tube portion 334 are equally spaced apart in the radial direction. In some embodiments, first tube portion 327 can be spaced apart from second tube portion 330 by a first distance, and second tube portion 330 can be spaced apart from third tube portion 334 by a second distance different from the first distance. In some embodiments, first tube portion 327, second tube portion 330, and third tube portion 334 can be approximately aligned along the longitudinal axis 324. In some embodiments, first tube portion 327, second tube portion 330, and third tube portion 334 can extend at an angle relative to the lateral axis 325 such that each of first, second, and third tube portions 327, 330, 334 form inward extending cones similar to bellows assembly 100 described above. In some embodiments, first, second, and third tube portions 327, 330, 334 can extend at different angles relative to the lateral axis 325 similar to bellows assembly 200 described above. The inventors realized and discovered that such radially overlapping of convolutions 314 can allow for improved packaging of bellows assembly 300 relative to conventional bellows. For example, bellows assembly 300 can have more radial compliance for a unit length than a conventional bellows or bellows assemblies 100, 200.

In some embodiments, second compliant portion 328 can include starting portion 360 that extends away from second compliant portion 328 approximately parallel with longitudinal axis 324. Starting portion 360 can have a sharp angle, approximately about 90 degrees, to improve the initial additive manufacturing of convolution 314.

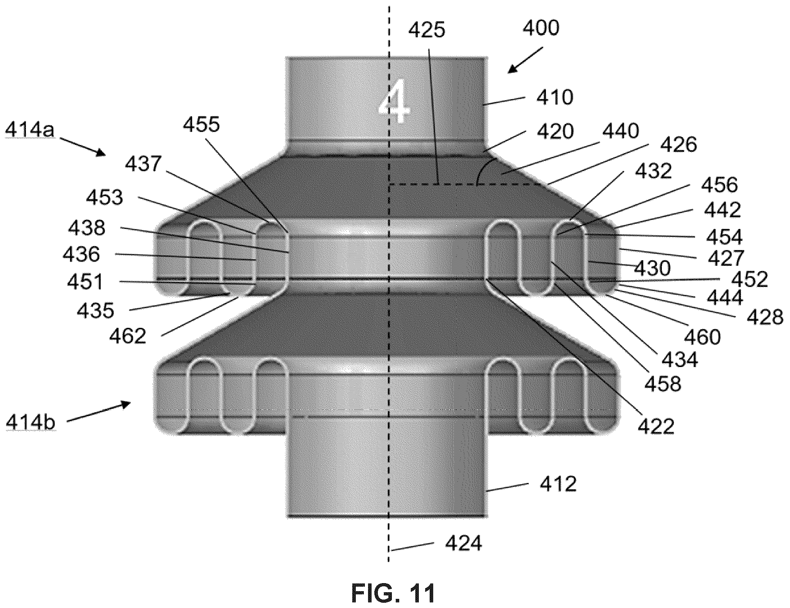

Another embodiment of a bellows assembly 400 in accordance with the present disclosure is shown in FIG. 11 showing a different convolution 414 configuration. Bellows assembly 400 is substantially similar to bellows assembly 100 shown in FIGS. 3-5 and described herein. Accordingly, similar reference numbers in the 400 series indicate commonalities between bellows assembly 400 and bellows assembly 100. The description of bellows assembly 100 is incorporated by reference to apply to bellows assembly 400, except in instances when it conflicts with the specific description and the drawings of bellows assembly 400.

FIG. 11 illustrates a cross-sectional side view of bellows assembly 400, according to embodiments. Bellows assembly 400 can be coupled to adjacent components in propulsion device 10. Bellows assembly 400 includes first connecting portion 410, second connecting portion 412, and at least one convolution 414. As shown in FIG. 11, for example, bellows assembly 400 includes two convolutions 414 with identical geometries stacked on top of each other along a longitudinal axis 424, but more convolutions 414 can also be possible. First connecting portion 410 extends around the longitudinal axis 424 to form a tube. Second connecting portion 412 extends around the longitudinal axis 424 to form a tube.

Convolution 414 extends between first connecting portion 410 and second connecting portion 412 along longitudinal axis 424 as shown, for example in FIG. 11. Convolution 414 is configured to be flexible such that first connecting portion 410 and second connecting portion 412 can move relative to one another. Convolution 414 can include first end 420, second end 422, first compliant portion 426, first tube portion 427, second tube portion 430, second compliant portion 428, third tube portion 434, third compliant portion 432, fourth tube portion 436, fourth compliant portion 437, fifth tube portion 438, and fifth compliant portion 439. First end 420 connects to first connecting portion 410. Second end 422 connects to second connecting portion 412, or to a first end of an adjacent convolution where bellows assembly 400 includes more than one convolution 414.

First compliant portion 426 extends outwardly away from first end 420 to form an inward cone. First compliant portion 426 extends at first angle 440 relative to a lateral axis 425, where the lateral axis 425 is perpendicular to the longitudinal axis 424. First angle 440 can be between about 30 degrees to about 80 degrees relative to the lateral axis 425. First tube portion 427 extends away from a distal end 442 of first compliant portion 426 approximately parallel to the longitudinal axis 424, such that first tube portion 427 forms a tube. Second compliant portion 428 extends from a distal end 444 of first tube portion 427 and couples to a distal end 452 of second tube portion 430. Second tube portion 430 extends away from second compliant portion 428 approximately parallel to longitudinal axis 424, such that second tube portion 430 forms a tube. Third compliant portion 432 extends from a proximal end 454 of second tube portion 430 and couples to a proximal end 456 of third tube portion 434. Third tube portion 434 extends away from third compliant portion 432 approximately parallel to longitudinal axis 424, such that third tube portion 434 forms a tube. Fourth compliant portion 437 extends from a distal end 458 of third tube portion 434 and couples to a distal end 451 of fourth tube portion 436. Fourth tube portion 436 extends away from fourth compliant portion 437 approximately parallel to longitudinal axis 424, such that fourth tube portion 436 forms a tube. Fifth compliant portion 439 extends from a proximal end 453 of fourth tube portion 436 and couples to a proximal end 455 of fifth tube portion 438. Fifth tube portion 438 extends away from fifth compliant portion 439 approximately parallel to longitudinal axis 424, such that fifth tube portion 438 forms a tube. Fifth tube portion 438 extends to and couples with second end 422.

In the illustrative embodiment in FIG. 11, first, second, third, fourth, and fifth tube portions 427, 430, 434, 436, 438 are equally spaced apart in the radial direction and parallel to one another. In some embodiments, first, second, third, fourth, and fifth tube portions 427, 430, 434, 436, 438 are parallel to one another and spaced apart by differing distances. In some embodiments, first, second, third, fourth, and fifth tube portions 427, 430, 434, 436, 438 can be approximately aligned along the longitudinal axis 324. In some embodiments, first, second, third, fourth, and fifth tube portions 427, 430, 434, 436, 438 can extend at an angle relative to the lateral axis 425 such that each of first, second, third, fourth, and fifth tube portions 427, 430, 434, 436, 438 form inward extending cones similar to bellows assembly 100 described above. In some embodiments, first, second, third, fourth, and fifth tube portions 427, 430, 434, 436, 438 can extend at different angles relative to the lateral axis 425 similar to bellows assembly 200 described above. The inventors realized and discovered that such radially overlapping of convolutions 414 can allow for improved packaging of bellows assembly 400 relative to conventional bellows. For example, bellows assembly 400 can have more radial compliance for a unit length than a conventional bellows, or bellows assemblies 100, 200, 300.

In some embodiments, second compliant portion 428 can include starting portion 460 that extends away from second compliant portion 428 approximately parallel with longitudinal axis 424. In some embodiments, fourth compliant portion 436 can include starting portion 462 that extends away from fourth compliant portion 436 approximately parallel with longitudinal axis 424. Starting portions 460, 462 can have sharp angles, approximately about 90 degrees, to improve the initial printing process of convolution 414.

### Example Spiral Bellows Assembly

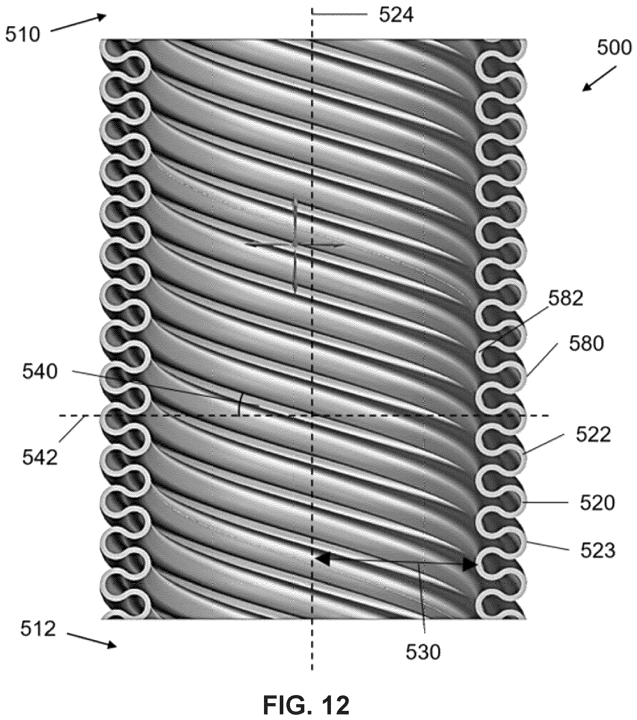

FIGS. 12-14 illustrate bellows assembly 500, according to embodiments. Bellows assembly 500 can be coupled to adjacent components in propulsion device 10. Bellows assembly 500 includes first connecting portion 510, second connecting portion 512, and helix convolution 514. Helix convolution 514 can include between about four and twelve individual adjoining convolutions, circumferentially spaced apart and parallel to one another, and extending between the first and second connecting portions 510, 512 to form the helix shape. In some embodiments, bellows assembly 500 is additively manufactured.

First connecting portion 510 (not shown) can extend around the longitudinal axis 524 to form a tube. First connecting portion 510 can be coupled to an adjacent component, such as an exhaust duct, or fuel line, in propulsion device 10. In some embodiments, first connecting portion 510 can be coupled to the adjacent component with a flange, or by welding, fusing, or other suitable coupling method. In some embodiments, first connecting portion 510 can be integral with the adjacent component to reduce overall part count in the propulsion device 10.

Second connecting portion 512 (not shown) can extend around the longitudinal axis 524 to form a tube. Second connecting portion 512 can be coupled to an adjacent component, such as an exhaust duct, or fuel line, in propulsion device 10. In some embodiments, second connecting portion 512 can be coupled to the adjacent component with a flange, or by welding, fusing, or other suitable coupling method. In some embodiments, second connecting portion 512 can be integral with the adjacent component to reduce overall part count in the propulsion device 10.

Helix convolution 514 extends between first connecting portion 510 and second connecting portion 512 along longitudinal axis 524. Helix convolution 514 can have a wall thickness between about 0.3 mm and 5 mm. In some embodiments, helix convolution 514 can have a wall thickness of about 0.5 mm. Helix convolution 514 can be configured to be flexible such that first connecting portion 510 and second connecting portion 512 can move relative to one another. In some embodiments, helix convolution 514 expands and contracts along the longitudinal axis 524 so that first connecting member 510 and second connecting portion 512 move toward and away from each other. In some embodiments, helix convolution 514 allows first connecting portion 510 and second connecting portion 512 to translate radially relative to each other, perpendicular to the longitudinal axis 524. In some embodiments, convolution 514 allows for angular rotation of first connecting portion 510 relative to second connecting portion 512 such that bellows assembly 500 can gimbal or tilt by an angle relative to longitudinal axis 524. In some embodiments, convolution 514 allows for torsional angular rotation of first connecting portion 510 relative to second connecting portion 512 such that bellows assembly 500 provides a torsion compliance between adjacent component of the propulsion device 10.

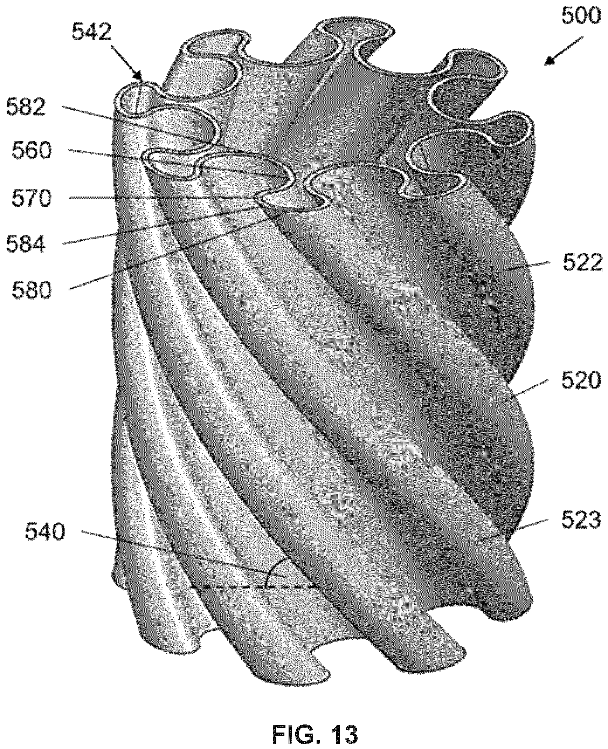

Helix convolution 514 can include a plurality of individual helixes circumferentially spaced apart and extending around longitudinal axis 524 parallel to one another as shown for example in FIGS. 12 and 13. A first helix 520 of the plurality of helixes can have identical geometry to adjacent helixes 522, 523 of the plurality of individual helixes. In some embodiments, first helix can have different geometry to adjacent helixes 522, 523 of the plurality of helixes. In some embodiments, the number of helixes in helix convolution 514 can be constrained by a radius 530 of the bellows assembly 500. For example, as radius 530 of helix convolution 514 increases, the number of helixes arranged around the circumference of helix convolution 514 can also increase. Alternatively, as radius 530 of helix convolution 514 decreases, the number of helixes that can be arranged around the circumference of helix convolution 514 can also decrease. In some embodiments, the number of helixes in helix convolution 514 can be a function of the desired flexibility of bellows assembly 500. More helixes can provide a stiffer bellows assembly, fewer helixes can provide a more flexible bellows assembly. In some embodiments, the number of helixes in helix convolution 514 can be a function of a desired weight and/or cost of bellows assembly 500.

First helix 520 is spaced apart from the longitudinal axis 524 by radius 530 and extends circumferentially around longitudinal axis 524 as shown, for example, in FIGS. 12 and 13. As first helix 520 extends circumferentially around longitudinal axis 524, first helix 520 increases in height along longitudinal axis 524 such that first helix 520 extends at a first angle 540 relative to plane 542. Plane 542 is perpendicular to longitudinal axis 524. In some embodiments, plane 542 can be horizontal and longitudinal axis 524 can be vertical during additive manufacturing of bellows assembly 500. In some embodiments, first angle 540 can be between about 10 degrees and about 30 degrees. In the embodiment shown in FIG. 13, helix convolution 514 can have steeper convolutions to provide increased torsional flexibility and/or more stable printing of bellows assembly 500, with first angle between about 30 degrees and about 60 degrees. In the illustrative embodiment in FIG. 12, first angle 540 is consistent along the length of helix convolution 514. In some embodiments, a lower first angle 540 provides more longitudinal and lateral flexibility of bellows assembly 500.

As shown, for example, in FIG. 13, first helix 520 has a cross-section parallel to plane 542 that includes a concave portion 560 and a convex portion 570. Each of adjacent helixes 522, 523, of helix convolution 514 have similar cross-sectional shape to first helix 520. Convex portion 570 extends from an outer radius portion 580 of helix convolution 514 inward toward concave portion 560. Convex portion 570 is at an overhang portion 584 of first helix 520. The inventors realized and discovered that using smaller local radii of convex portion 570 or increased first angle 540 of first helix 520 would increase printing stability and manufacturing yield of bellows assembly 500, and to avoid melt-pool instability in overhang portion 584. Concave portion 560 extends inwardly away from convex portion 570 with opposite curvature to convex portion 570 and toward inner radius portion 582. Concave portion 560 can have larger radius than convex portion while maintaining high printing stability during additive manufacturing. Concave portion 560 is supported by inner radius portion 582 and convex portion 570 and can have more stable printing properties than convex portion 570.

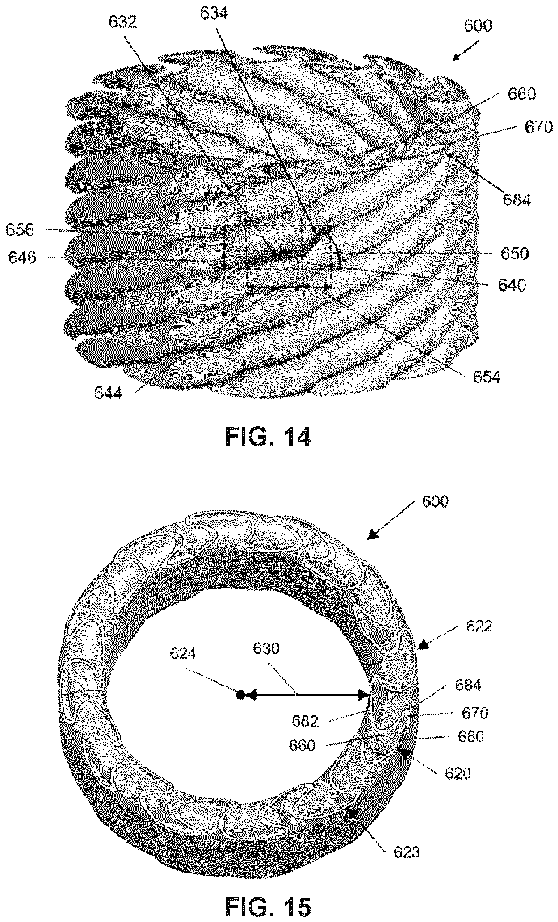

Another embodiment of a bellows assembly 600 in accordance with the present disclosure is shown in FIGS. 14 and 15 showing a different helix convolution 614 configuration. Bellows assembly 600 is substantially similar to bellows assembly 500 shown in FIGS. 12 and 13 and described herein. Accordingly, similar reference numbers in the 600 series indicate commonalities between bellows assembly 600 and bellows assembly 500. The description of bellows assembly 500 is incorporated by reference to apply to bellows assembly 600, except in instances when it conflicts with the specific description and the drawings of bellows assembly 600.

FIGS. 14 and 15 illustrate bellows assembly 600, according to embodiments. Bellows assembly 600 can be coupled to adjacent components in propulsion device 10. Bellows assembly 600 includes first connecting portion 610, second connecting portion 612, and helix convolution 614. Helix convolution 614 can include between about four and twelve individual convolutions, circumferentially spaced apart and parallel to one another, and extending between the first and second connecting portions 610, 612 to form the helix shape. In some embodiments, bellows assembly 600 is additively manufactured.

First connecting portion 610 (not shown) can extend around the longitudinal axis 624 to form a tube. First connecting portion 610 can be coupled to an adjacent component, such as an exhaust duct, or fuel line, in propulsion device 10. In some embodiments, first connecting portion 610 can be coupled to the adjacent component with a flange, or by welding, fusing, or other suitable coupling method. In some embodiments, first connecting portion 610 can be integral with the adjacent component to reduce overall part count in the propulsion device 10.

Second connecting portion 612 (not shown) can extend around the longitudinal axis 624 to form a tube. Second connecting portion 612 can be coupled to an adjacent component, such as an exhaust duct, or fuel line, in propulsion device 10. In some embodiments, second connecting portion 612 can be coupled to the adjacent component with a flange, or by welding, fusing, or other suitable coupling method. In some embodiments, second connecting portion 612 can be integral with the adjacent component to reduce overall part count in the propulsion device 10.

Helix convolution 614 extends between first connecting portion 610 and second connecting portion 612 along longitudinal axis 624. Helix convolution 614 can have a wall thickness between about 0.3

mm and 5 mm. In some embodiments, helix convolution 614 can have a wall thickness of about 0.5 mm. Helix convolution 614 can be configured to be flexible such that first connecting portion 610 and second connecting portion 612 can move and translate relative to one another similar to bellows assembly 500 described above.

Helix convolution 614 can include a plurality of individual helixes 620, 622, 623 circumferentially spaced apart and extending around longitudinal axis 624 parallel to one another as shown for example in FIGS. 14 and 15. A first helix 620 of the plurality of helixes can have identical geometry to adjacent helixes 622, 623 of the plurality of individual helixes. In some embodiments, first helix can have different geometry to adjacent helixes 622, 623 of the plurality of helixes. In some embodiments, the number of helixes in helix convolution 614 can be constrained by a radius 630 of the bellows assembly 600. In some embodiments, the number of helixes in helix convolution 614 can be a function of the desired flexibility of bellows assembly 600.

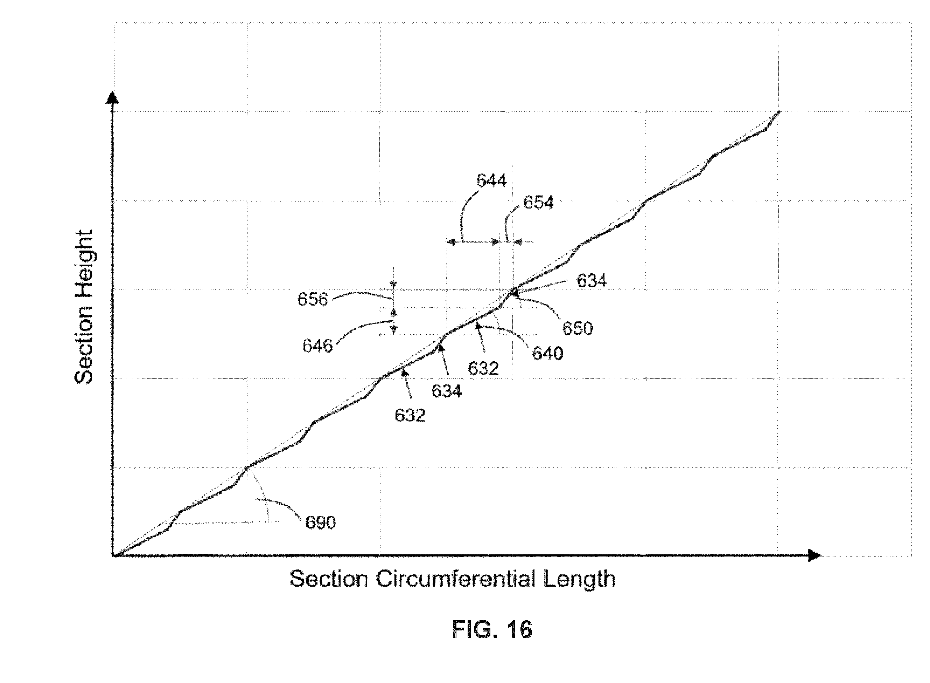

First helix 620 is spaced apart from the longitudinal axis 624 by radius 630 and extends circumferentially around longitudinal axis 624 as shown, for example, in FIGS. 14 and 15. As first helix 620 extends circumferentially around longitudinal axis 624, first helix 620 increases in height along longitudinal axis 624. First helix 620 includes first section 632 and second section 634. First section 632 extends at a first angle 640 relative to plane 642 and extends around longitudinal axis 624 for a first circumferential length 644. The first angle 640 and first circumferential length 642 result in first section 632 having a first height 646 along longitudinal axis 624. In some embodiments, first angle 640 can be between about 10 degrees and about 30 degrees. In the illustrative embodiment shown in FIG. 14, first angle 640 is about 20 degrees relative to plane 642. In some embodiments, first height 646 of first section 632 is between about 2 mm and about 12 mm. In the illustrative embodiment shown in FIG. 14, first height 646 is about 5 mm. First angle 640, first circumferential length 644, and first height 646 are illustratively shown in a graphical view in FIG. 16.

Second section 634 extends at a second angle 650 relative to plane 642 and extends around longitudinal axis 624 for a second circumferential length 654. The second angle 650 and second circumferential length 654 result in second section 634 having a second height 656 along longitudinal axis 624. In some embodiments, second angle 650 is greater than first angle 640. The inventor realized and discovered that a configuration in which second angle 650 is greater than that of first angle 640 can allow second section 634 to have more stable printing properties to provide bellows assembly 600 with a robustness during manufacture. In some embodiments, second angle 650 can be between about 30 degrees and about 60 degrees. In the illustrative embodiment shown in FIGS. 14 and 16, second angle 650 is about 45 degrees relative to plane 642. In some embodiments, second height 656 of second section 634 is between about 2 mm and about 7 mm. In the illustrative embodiment shown in FIG. 14, second height 656 is about 2 mm.

First helix 620 extends between first connecting portion 610 and second connecting portion 612 with alternating first and second sections 632, 634 as shown, for example, in FIG. 14. For example, first section 632 can extend from second connecting portion 612, and then second section 634 can extend from first section 632, then a first section 632 and second section 634 extend therefrom. First and section sections 632, 634 of first helix 620 can alternate and extend from one another along longitudinal axis 624 until first helix 620 couples to first connecting portion 610. As a result, first helix 620 has a stepped shape as it extends between first and second connecting portions 610, 612. As illustratively shown in FIG. 16, first helix 620 has an average angle 690 relative to plane 642 based on the combinations of the first and second sections 632, 634 and the relative geometries of each of first and second sections 632, 634. In the illustrative embodiment shown in FIG. 14, helix convolution 614 has an average angle 690 of about 24 degrees, where first angle is about 20 degrees, first height is about 5 mm, second angle is about 45 degree, and second height is about 2 mm. In some embodiments, helix convolution can have an average angle 690 between about 15 degrees and about 30 degrees. The inventors realized and discovered that a lower average angle 690 increases the flexibility of bellows assembly 600. Geometries of first and second sections 632, 634 can be optimized for printability, manufacturing yield, and flexibility of bellows assembly 600.

As shown, for example, in FIG. 15, first helix 620 has a cross-section parallel to plane 642 that includes a concave portion 660 and a convex portion 670. Each of adjacent helixes 622, 623, of helix convolution 614 have similar cross-sectional shape to first helix 620, but at a given cross-section along longitudinal axis 624, each helix 620, 622, 623 can appear different. The difference in appearance is based on the compound first and second section 632, 634 geometries along longitudinal axis 624 and relative locations of first section 632 and/or second section 634 for the location where the cross-section is taken.

Convex portion 670 extends from an outer radius portion 680 of helix convolution 614 inward toward concave portion 660. The inventors realized and discovered that using smaller local radii of convex portion 670 or increased first and second angles 640, 650 of first helix 620 would increase printing stability and manufacturing yield of bellows assembly 600, and to avoid melt-pool instability in overhang portion 684. Concave portion 660 extends inwardly away from convex portion 670 with opposite curvature to convex portion 670 and toward inner radius portion 682. Concave portion 660 can have larger radius than convex portion 670 while maintaining high printing stability during additive manufacturing. Concave portion 660 is supported by inner radius portion 682 and convex portion 670 and has more stable printing properties than convex portion 670.

Bellows assembly 500 and bellows assembly 600 can provide a flexible bellow design with geometry to increase printing stability and additive manufacturing yields of the design. Bellows assembly 500 and bellows assembly 600 can provide geometry that do not need additional supports during manufacture. Helix convolutions 514, 614 can allow the walls of the print to overlap without creating sharp overhangs, which can allow the bellows assemblies 500, 600 to be printed without supports.

The cross section of helix convolutions 514, 614 can minimize the curvature or radius of the convex portions 570, 670 of outcropping sections 584, 684 of the bellows assembly 500, 600. The reduced curvature can decrease warp up, material shape changes caused by heat, or decrease printing instability of convex portions 570, 670. As such, low first angles 540, 640, approximately 20 degrees, can be used for convex portions 570, 670 to print smooth overhangs 584, 684 without the need for supports.

Bellows assembly 600 can have varied overhang angle 640, 650 throughout the print. By alternating between, for example, about a 5 mm first height 646 with about a 20 degree first angle 640 overhang and about a 2 mm second height 656 and about a 45 degree second angle 650 overhang, the bellows assembly 600 can be printed with fewer undesirable overhang errors. This alternating overhang angle 640, 650 can allow for a continuous unsupported overhang angle 690 of about 24 degrees as shown, for example, in FIG. 16. The ability to print sharper overhangs 684 can allow for more wall overlap in the bellows assembly 600, which can result in less stiffness for the same part volume.

### Additional embodiments

Bellows have applications anywhere fluid systems exist, such as mining, fracking, oil and gas recovery, and so forth. Bellows also have application outside of fluid systems, for example, as highly customized springs in a purely structural/mechanical use. Examples of such purely structure/mechanical uses include vehicle suspensions, hydraulic and pneumatic spring return mechanisms, or basically anywhere a spring would also fit the application. Accordingly, it should be understood that while some embodiments include propulsion devices and connections to and within propulsion devices, the invention itself is not so limited. The embodiments described above are contemplated for use with such fluid systems and structural/mechanical systems.

### Conclusion

It is to be appreciated that the Detailed Description section, and not any other section, is intended to be used to interpret the claims. Other sections can set forth one or more but not all embodiments as contemplated by the inventors, and thus, are not intended to limit this disclosure or the appended claims in any way.

While this disclosure describes example embodiments for example fields and applications, it should be understood that the disclosure is not limited thereto. Other embodiments and modifications thereto are possible, and are within the scope of this disclosure. For example, and without limiting the generality of this paragraph, embodiments are not limited to the hardware and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different from those described herein.

References herein to "an embodiment," "some embodiments," "an example," or similar phrases, indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art to incorporate such feature, structure, or characteristic into other embodiment whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described embodiments, which are merely examples, but should be defined only in accordance with the following claims.

## Claims

1. A bellows assembly (100) comprising:
a first connecting portion (110) configured to connect to a first component;
a second connecting portion (112) configured to connect to a second component; and
at least one convolution portion (114) between the first connecting portion (110) and the second connecting portion (112) and configured to provide compliance such that the first connecting portion (110) moves relative to the second connecting portion (112), the at least one convolution portion (114) comprising:
a first end (120) disposed toward the first connecting portion (110),
a second end (122) spaced away from the first end (120), toward the second connecting portion (112),
a longitudinal axis (124) extending from the first end (120) to the second end (122) and a lateral axis (125) perpendicular to the longitudinal axis (124),
a first compliant portion (126) extending outwardly away from the first end (120) at a first angle (140) relative to the lateral axis (125),
a second compliant portion (128),
a third compliant portion (130) extending outwardly away from the second end (122) at a second angle (150) relative to the lateral axis (125),
the second compliant portion (128) formed between and coupling to distal ends (142, 152) of the first and third compliant portions,
wherein the first angle (140) and the second angle (150) are between about 30 degrees to 80 degrees such that the first compliant portion (126) and the third compliant portion (130) form inward extending cone shapes;
**characterised in that** the bellows assembly (100) further comprises a starter portion (160) that extends away from the second compliant portion (128) along the longitudinal axis (124) and is configured to provide a starting point for additively manufacturing the at least one convolution portion (114).

2. The bellows assembly (100) of claim 1, wherein the first angle (140) and the second angle (150) are equal such that the first compliant portion (126) is parallel to the third compliant portion (130).

3. The bellows assembly (100) of claim 1, wherein the first angle (140) is different from the second angle (150) such that the first compliant portion (126) and the third compliant portion (130) converge toward the first end (120) and the second end (122).

4. The bellows assembly (100) of any of claims 1-3, wherein the first connecting portion is integral with the first component and the second connecting portion is integral with the second component, such that the first component, the first connecting portion, the second connecting portion, and the second component are a single piece structure, optionally wherein the single piece structure is metal.

5. The bellows assembly (100) of any preceding claim, wherein the first connecting portion (110) and the second connecting portion (112) move relative to one another in at least one of an axial movement perpendicular to the longitudinal axis (124), compression or extension along the longitudinal axis (124), and a gimballing tilting angle relative to the longitudinal axis (124).

6. The bellows assembly (100) of any preceding claim, wherein the at least one convolution portion (114) comprises at least four convolution portions, and/or
wherein the second compliant portion (128) is located below the first end (120) and the second end (122), and/or
wherein the at least one convolution portion (114) has a wall thickness of about 0.5 millimeters.

7. A bellows assembly (300) comprising:
a first connecting portion (310);
a second connecting portion (312); and
at least one convolution portion (314) formed between the first connecting portion (310) and the second connecting portion (312) and configured to provide compliance such that the first connecting portion (310) moves relative to the second connecting portion (312), the at least one convolution portion (314) comprising:
a first end (320),
a second end (322),
a longitudinal axis (324) extending from the first end (320) to the second end (322) and a lateral axis (325) perpendicular to the longitudinal axis (324),
a first compliant portion (326) extending outwardly away from the first end (320) at a first angle (340) relative to the lateral axis (325),
a first tube portion (327) extending away from the first compliant portion (326) end,
a second tube portion (330) radially spaced apart from the first tube portion (327),
a second compliant portion (328) formed between and coupling the first and second tube portions,
a third tube portion (334) radially spaced apart from the second tube portion (330) and extending away from the second end (322) approximately parallel to the longitudinal axis (324), and
a third compliant portion (332) formed between and coupling the second and third tube portions;
**characterised in that** the first tube portion (327), the second tube portion (330) and the third tube portion (334) are axially aligned along the longitudinal axis (324).

8. The bellows assembly (300) of claim 7, wherein the first angle (340) is between about 30 degrees to 80 degrees such that the first compliant portion (326) forms an inward extending cone.

9. The bellows assembly (300) of claim 7 or 8, wherein the first tube portion (327) and the second tube portion (330) are radially spaced apart by a first distance, and the second tube portion (330) and the third tube portion (334) are radially spaced apart by a second distance, wherein the first distance is equal to the second distance.

10. The bellows assembly (300) of any of claims 7-9, wherein the at least one convolution portion (314) is at least four convolution portions, and/or
wherein the at least one convolution portion (314) has a wall thickness of about 0.5 millimeters.

11. The bellows assembly (400) of any of claims 7-10, wherein the at least one convolution (414) further comprises:
a fourth tube portion (436) radially spaced apart from the third tube portion (434),
a fourth compliant portion (437) formed between and coupling the fourth tube portion (436) to the second end (422) and third tube portion (432),
a fifth tube portion 438) radially spaced apart from the fourth tube portion (436) and extending away from a third end,
a fifth compliant portion (437) formed between and coupling the fourth and fifth tube portions.

12. A bellows assembly (500) comprising:
a first connecting portion (510);
a second connecting portion (512) spaced apart from the first connecting portion (510) along a longitudinal axis (524); and
a helix convolution portion (514) formed between the first connecting portion (510) and the second connecting portion (512) and configured to provide compliance such that the first connecting portion (510) moves relative to the second connecting portion (512),
wherein the helix convolution portion (514) extends circumferentially around and along the longitudinal axis (524) and has a first section (632) with a first angle (640) relative to a lateral axis that is perpendicular to the longitudinal axis,
**characterised in that** the helix convolution (514) comprises a second section (634) extending from the first section (632), wherein the second section (634) has a second angle (650) relative to the lateral axis, wherein the second angle is greater than the first angle.

13. The bellows assembly (500) of claim 12, wherein the first section (632) has a first height along the longitudinal axis, the second section (634) has a second height along the longitudinal axis, and the first height is greater than the second height, and/or
wherein the first angle is between about 10 degrees and about 30 degrees, and the second angle is between about 30 degrees and about 60 degrees.

14. A bellows assembly (500) comprising:
a first connecting portion (510);
a second connecting portion (512) spaced apart from the first connecting portion along a longitudinal axis (524); and
a helix convolution portion (514) formed between the first connecting portion (510) and the second connecting portion (512) and configured to provide compliance such that the first connecting portion (510) moves relative to the second connecting portion (512),
wherein the helix convolution portion (514) is spaced apart from the longitudinal axis (524) by a radius (530) and extends circumferentially around the longitudinal axis while increasing in height along the longitudinal axis such that the helix convolution portion extends at a first angle relative to a plane perpendicular to the longitudinal axis;
**characterised in that**
a cross-sectional shape of the helix convolution (514), in the plane perpendicular to the longitudinal axis (524), comprises:
a concave portion (560),
a convex portion (570),
an outer radius portion (580) of the helix convolution (514),
an inner radius portion (582) of the helix convolution (514),
wherein the convex portion (570) is at an overhang portion (584) of the helix convolution (514) and extends from the outer radius portion (580) inward toward the concave portion (560), and
the concave portion (560) extends inwardly away from the convex portion (570) with opposite curvature to convex portion (570) and toward the inner radius portion (582).

## Patentansprüche

1. Balganordnung (100), die Folgendes umfasst:
einen ersten Verbindungsabschnitt (110), der dazu ausgelegt ist, eine Verbindung mit einer ersten Komponente herzustellen;
einen zweiten Verbindungsabschnitt (112), der dazu ausgelegt ist, eine Verbindung mit einer zweiten Komponente herzustellen; und
mindestens einen Faltungsabschnitt (114) zwischen dem ersten Verbindungsabschnitt (110) und dem zweiten Verbindungsabschnitt (112), der dazu ausgelegt ist, eine Nachgiebigkeit bereitzustellen, sodass sich der erste Verbindungsabschnitt (110) relativ zu dem zweiten Verbindungsabschnitt (112) bewegt, wobei der mindestens eine Faltungsabschnitt (114) Folgendes umfasst:
ein erstes Ende (120), das zu dem ersten Verbindungsabschnitt (110) hin angeordnet ist,
ein zweites Ende (122), das von dem ersten Ende (120) in Richtung des zweiten Verbindungsabschnitts (112) beabstandet ist,
eine Längsachse (124), die sich von dem ersten Ende (120) zu dem zweiten Ende (122) erstreckt, und eine Querachse (125), die senkrecht zu der Längsachse (124) ist,
einen ersten nachgiebigen Abschnitt (126), der sich von dem ersten Ende (120) in einem ersten Winkel (140) relativ zu der Querachse (125) nach außen weg erstreckt, einen zweiten nachgiebigen Abschnitt (128),
einen dritten nachgiebigen Abschnitt (130), der sich von dem zweiten Ende (122) in einem zweiten Winkel (150) relativ zu der Querachse (125) nach außen weg erstreckt, wobei der zweite nachgiebige Abschnitt (128) zwischen distalen Enden (142, 152) des ersten und dritten nachgiebigen Abschnitts gebildet ist und mit diesen gekoppelt ist,
wobei der erste Winkel (140) und der zweite Winkel (150) zwischen etwa 30 Grad bis 80 Grad liegen, so dass der erste nachgiebige Abschnitt (126) und der dritte nachgiebige Abschnitt (130) sich nach innen erstreckende Kegelformen bilden;
**dadurch gekennzeichnet, dass** die Balganordnung (100) ferner einen Starterabschnitt (160) umfasst, der sich von dem zweiten nachgiebigen Abschnitt (128) entlang der Längsachse (124) weg erstreckt und dazu ausgelegt ist, einen Startpunkt zum additiven Herstellen des mindestens einen Faltungsabschnitts (114) bereitzustellen.

2. Balganordnung (100) nach Anspruch 1, wobei der erste Winkel (140) und der zweite Winkel (150) gleich sind, so dass der erste nachgiebige Abschnitt (126) parallel zu dem dritten nachgiebigen Abschnitt (130) ist.

3. Balganordnung (100) nach Anspruch 1, wobei sich der erste Winkel (140) von dem zweiten Winkel (150) unterscheidet, so dass der erste nachgiebige Abschnitt (126) und der dritte nachgiebige Abschnitt (130) zu dem ersten Ende (120) und dem zweiten Ende (122) konvergieren.

4. Balganordnung (100) nach einem der Ansprüche 1-3, wobei der erste Verbindungsabschnitt integral mit der ersten Komponente ist und der zweite Verbindungsabschnitt integral mit der zweiten Komponente ist, so dass die erste Komponente, der erste Verbindungsabschnitt, der zweite Verbindungsabschnitt und die zweite Komponente eine einstückige Struktur sind, wobei optional die einstückige Struktur Metall ist.

5. Balganordnung (100) nach einem der vorhergehenden Ansprüche, wobei sich der erste Verbindungsabschnitt (110) und der zweite Verbindungsabschnitt (112) relativ zueinander in einer axialen Bewegung senkrecht zu der Längsachse (124) und/oder einer Kompression oder Ausdehnung entlang der Längsachse (124) und/oder einem kardanischen Kippwinkel relativ zu der Längsachse (124) bewegen.

6. Balganordnung (100) nach einem der vorhergehenden Ansprüche, wobei der mindestens eine Faltungsabschnitt (114) mindestens vier Faltungsabschnitte umfasst, und/oder
wobei sich der zweite nachgiebige Abschnitt (128) unterhalb des ersten Endes (120) und des zweiten Endes (122) befindet, und/oder
wobei der mindestens eine Faltungsabschnitt (114) eine Wanddicke von etwa 0,5 Millimeter aufweist.

7. Balganordnung (300), die Folgendes umfasst:
einen ersten Verbindungsabschnitt (310);
einen zweiten Verbindungsabschnitt (312); und
mindestens einen Faltungsabschnitt (314), der zwischen dem ersten Verbindungsabschnitt (310) und dem zweiten Verbindungsabschnitt (312) gebildet und dazu ausgelegt ist, eine Nachgiebigkeit bereitzustellen, sodass sich der erste Verbindungsabschnitt (310) relativ zu dem zweiten Verbindungsabschnitt (312) bewegt, wobei der mindestens eine Faltungsabschnitt (314) Folgendes umfasst:
ein erstes Ende (320),
ein zweites Ende (322),
eine Längsachse (324), die sich von dem ersten Ende (320) zu dem zweiten Ende (322) erstreckt, und eine Querachse (325), die senkrecht zu der Längsachse (324) ist,
einen ersten nachgiebigen Abschnitt (326), der sich von dem ersten Ende (320) in einem ersten Winkel (340) relativ zu der Querachse (325) nach außen weg erstreckt, einen ersten Rohrabschnitt (327), der sich von dem Ende des ersten nachgiebigen Abschnitts (326) weg erstreckt, einen zweiten Rohrabschnitt (330), der radial von dem ersten Rohrabschnitt (327) beabstandet ist,
einen zweiten nachgiebigen Abschnitt (328), der zwischen dem ersten und dem zweiten Rohrabschnitt gebildet ist und diesen koppelt,
einen dritten Rohrabschnitt (334), der radial von dem zweiten Rohrabschnitt (330) beabstandet ist und sich von dem zweiten Ende (322) weg etwa parallel zu der Längsachse (324) erstreckt, und
einen dritten nachgiebigen Abschnitt (332), der zwischen dem zweiten und dem dritten Rohrabschnitt gebildet ist und diese koppelt;
**dadurch gekennzeichnet, dass** der erste Rohrabschnitt (327), der zweite Rohrabschnitt (330) und der dritte Rohrabschnitt (334) axial entlang der Längsachse (324) ausgerichtet sind.

8. Balganordnung (300) nach Anspruch 7, wobei der erste Winkel (340) zwischen etwa 30 Grad bis 80 Grad liegt, so dass der erste nachgiebige Abschnitt (326) einen sich nach innen erstreckenden Kegel bildet.

9. Balganordnung (300) nach Anspruch 7 oder 8, wobei der erste Rohrabschnitt (327) und der zweite Rohrabschnitt (330) radial um einen ersten Abstand beabstandet sind und der zweite Rohrabschnitt (330) und der dritte Rohrabschnitt (334) radial um einen zweiten Abstand beabstandet sind,
wobei der erste Abstand gleich dem zweiten Abstand ist.

10. Balganordnung (300) nach einem der Ansprüche 7-9, wobei der mindestens eine Faltungsabschnitt (314) mindestens vier Faltungsabschnitte ist, und/oder
wobei der mindestens eine Faltungsabschnitt (314) eine Wanddicke von etwa 0,5 Millimeter aufweist.

11. Balganordnung (400) nach einem der Ansprüche 7-10, wobei die mindestens eine Faltung (414) ferner Folgendes umfasst:
einen vierten Rohrabschnitt (436), der radial von dem dritten Rohrabschnitt (434) beabstandet ist,
einen vierten nachgiebigen Abschnitt (437) 422, der zwischen dem vierten Rohrabschnitt (436) und dem dritten Rohrabschnitt (432) gebildet ist und diese koppelt,
einen fünften Rohrabschnitt (438), der radial von dem vierten Rohrabschnitt (436) beabstandet ist und sich von einem dritten Ende weg erstreckt,
einen fünften nachgiebigen Abschnitt (437), der zwischen dem vierten und dem fünften Rohrabschnitt gebildet ist und diese koppelt.

12. Balganordnung (500), die Folgendes umfasst:
einen ersten Verbindungsabschnitt (510);
einen zweiten Verbindungsabschnitt (512), der von dem ersten Verbindungsabschnitt (510) entlang einer Längsachse (524) beabstandet ist; und
einen spiralförmigen Faltungsabschnitt (514), der zwischen dem ersten Verbindungsabschnitt (510) und dem zweiten Verbindungsabschnitt (512) gebildet und dazu ausgelegt ist, eine Nachgiebigkeit bereitzustellen, so dass sich der erste Verbindungsabschnitt (510) relativ zu dem zweiten Verbindungsabschnitt (512) bewegt,
wobei sich der spiralförmige Faltungsabschnitt (514) umlaufend um und entlang der Längsachse (524) erstreckt und einen ersten Abschnitt (632) mit einem ersten Winkel (640) relativ zu einer Querachse aufweist, die senkrecht zu der Längsachse ist, **dadurch gekennzeichnet, dass** die spiralförmige Faltung (514) einen zweiten Abschnitt (634) umfasst, der sich von dem ersten Abschnitt (632) erstreckt, wobei der zweite Abschnitt (634) einen zweiten Winkel (650) relativ zu der Querachse aufweist, wobei der zweite Winkel größer als der erste Winkel ist.

13. Balganordnung (500) nach Anspruch 12, wobei der erste Abschnitt (632) eine erste Höhe entlang der Längsachse aufweist, der zweite Abschnitt (634) eine zweite Höhe entlang der Längsachse aufweist und die erste Höhe größer als die zweite Höhe ist, und/oder wobei der erste Winkel zwischen etwa 10 Grad und etwa 30 Grad liegt und der zweite Winkel zwischen etwa 30 Grad und etwa 60 Grad liegt.

14. Balganordnung (500), die Folgendes umfasst:
einen ersten Verbindungsabschnitt (510);
einen zweiten Verbindungsabschnitt (512), der von dem ersten Verbindungsabschnitt entlang einer Längsachse (524) beabstandet ist; und
einen spiralförmigen Faltungsabschnitt (514), der zwischen dem ersten Verbindungsabschnitt (510) und dem zweiten Verbindungsabschnitt (512) gebildet und dazu ausgelegt ist, eine Nachgiebigkeit bereitzustellen, so dass sich der erste Verbindungsabschnitt (510) relativ zu dem zweiten Verbindungsabschnitt (512) bewegt,
wobei der spiralförmige Faltungsabschnitt (514) von der Längsachse (524) um einen Radius (530) beabstandet ist und sich umlaufend um die Längsachse erstreckt, während er in der Höhe entlang der Längsachse zunimmt, so dass sich der spiralförmige Faltungsabschnitt in einem ersten Winkel relativ zu einer Ebene senkrecht zu der Längsachse erstreckt;
**dadurch gekennzeichnet, dass** eine Querschnittsform der spiralförmigen Faltung (514) in der Ebene senkrecht zu der Längsachse (524) Folgendes umfasst:
einen konkaven Abschnitt (560),
einen konvexen Abschnitt (570),
einen Außenradiusabschnitt (580) der spiralförmigen Faltung (514),
einen Innenradiusabschnitt (582) der spiralförmigen Faltung (514),
wobei sich der konvexe Abschnitt (570) an einem Überhangabschnitt (584) der spiralförmigen Faltung (514) befindet und sich von dem Außenradiusabschnitt (580) nach innen zu dem konkaven Abschnitt (560) erstreckt, und wobei sich der konkave Abschnitt (560) nach innen weg von dem konvexen Abschnitt (570) mit entgegengesetzter Krümmung zu dem konvexen Abschnitt (570) und zu dem Innenradiusabschnitt (582) hin erstreckt.

## Revendications

1. Ensemble soufflet (100), comprenant :
une première partie de raccordement (110) conçue pour se raccorder à un premier composant ;
une deuxième partie de raccordement (112) conçue pour se raccorder à un deuxième composant ; et
au moins une partie de convolution (114) entre la première partie de raccordement (110) et la deuxième partie de raccordement (112) et conçue pour fournir une souplesse de sorte que la première partie de raccordement (110) se déplace par rapport à la deuxième partie de raccordement (112), l'au moins une partie de convolution (114) comprenant :
une première extrémité (120) disposée vers la première partie de raccordement (110),
une deuxième extrémité (122) espacée de la première extrémité (120), vers la deuxième partie de raccordement (112),
un axe longitudinal (124) s'étendant de la première extrémité (120) à la deuxième extrémité (122) et un axe latéral (125) perpendiculaire à l'axe longitudinal (124), une première partie souple (126) s'étendant vers l'extérieur à l'opposé de la première extrémité (120) selon un premier angle (140) par rapport à l'axe latéral (125),
une deuxième partie souple (128),
une troisième partie souple (130) s'étendant vers l'extérieur à l'opposé de la deuxième extrémité (122) selon un deuxième angle (150) par rapport à l'axe latéral (125),
la deuxième partie souple (128) étant formée entre des extrémités distales (142, 152) des première et troisième parties souples et s'accouplant à celles-ci,
dans lequel le premier angle (140) et le deuxième angle (150) sont compris entre environ 30 degrés et 80 degrés de telle sorte que la première partie souple (126) et la troisième partie souple (130) prennent des formes de cônes s'étendant vers l'intérieur ;
**caractérisé en ce que** l'ensemble soufflet (100) comprend en outre une partie de démarrage (160) qui s'étend à l'opposé de la deuxième partie souple (128) le long de l'axe longitudinal (124) et est conçue pour fournir un point de départ pour la fabrication additive de l'au moins une partie de convolution (114).

2. Ensemble soufflet (100) selon la revendication 1, dans lequel le premier angle (140) et le deuxième angle (150) sont égaux de telle sorte que la première partie souple (126) est parallèle à la troisième partie souple (130).

3. Ensemble soufflet (100) selon la revendication 1, dans lequel le premier angle (140) est différent du deuxième angle (150) de telle sorte que la première partie souple (126) et la troisième partie souple (130) convergent vers la première extrémité (120) et la deuxième extrémité (122).

4. Ensemble soufflet (100) selon l'une quelconque des revendications 1 à 3, dans lequel la première partie de raccordement est formée d'un seul tenant avec le premier composant et la deuxième partie de raccordement est formée d'un seul tenant avec le deuxième composant, de sorte que le premier composant, la première partie de raccordement, la deuxième partie de raccordement et le deuxième composant sont une structure monobloc, éventuellement dans lequel la structure monobloc est métallique.

5. Ensemble soufflet (100) selon l'une quelconque des revendications précédentes, dans lequel la première partie de raccordement (110) et la deuxième partie de raccordement (112) se déplacent l'une par rapport à l'autre selon au moins un déplacement parmi un déplacement axial perpendiculaire à l'axe longitudinal (124), une compression ou une extension le long de l'axe longitudinal (124), et un angle d'inclinaison de cardan par rapport à l'axe longitudinal (124).

6. Ensemble soufflet (100) selon l'une quelconque des revendications précédentes, dans lequel l'au moins une partie de convolution (114) comprend au moins quatre parties de convolution, et/ou
dans lequel la deuxième partie souple (128) est située en dessous de la première extrémité (120) et de la deuxième extrémité (122), et/ou
dans lequel l'au moins une partie de convolution (114) a une épaisseur de paroi d'environ 0,5 millimètre.

7. Ensemble soufflet (300), comprenant :
une première partie de raccordement (310) ;
une deuxième partie de raccordement (312) ; et
au moins une partie de convolution (314) formée entre la première partie de raccordement (310) et la deuxième partie de raccordement (312) et conçue pour fournir une souplesse de sorte que la première partie de raccordement (310) se déplace par rapport à la deuxième partie de raccordement (312), l'au moins une partie de convolution (314) comprenant :
une première extrémité (320),
une deuxième extrémité (322),
un axe longitudinal (324) s'étendant de la première extrémité (320) à la deuxième extrémité (322) et un axe latéral (325) perpendiculaire à l'axe longitudinal (324), une première partie souple (326) s'étendant vers l'extérieur à l'opposé de la première extrémité (320) selon un premier angle (340) par rapport à l'axe latéral (325),
une première partie de tube (327) s'étendant à l'opposé de l'extrémité de la première partie souple (326),
une deuxième partie de tube (330) espacée radialement de la première partie de tube (327),
une deuxième partie souple (328) formée entre les première et deuxième parties de tube et accouplant celles-ci,
une troisième partie de tube (334) espacée radialement de la deuxième partie de tube (330) et s'étendant à l'opposé de la deuxième extrémité (322) approximativement parallèlement à l'axe longitudinal (324), et
une troisième partie souple (332) formée entre les deuxième et troisième parties de tube et accouplant celles-ci ;
**caractérisé en ce que** la première partie de tube (327), la deuxième partie de tube (330) et la troisième partie de tube (334) sont alignées axialement le long de l'axe longitudinal (324).

8. Ensemble soufflet (300) selon la revendication 7, dans lequel le premier angle (340) est compris entre environ 30 degrés et 80 degrés de sorte que la première partie souple (326) forme un cône s'étendant vers l'intérieur.

9. Ensemble soufflet (300) selon la revendication 7 ou 8, dans lequel la première partie de tube (327) et la deuxième partie de tube (330) sont espacées radialement d'une première distance, et la deuxième partie de tube (330) et la troisième partie de tube (334) sont espacées radialement d'une deuxième distance,
dans lequel la première distance est égale à la deuxième distance.

10. Ensemble soufflet (300) selon l'une quelconque des revendications 7 à 9, dans lequel l'au moins une partie de convolution (314) est au moins quatre parties de convolution, et/ou
dans lequel l'au moins une partie de convolution (314) a une épaisseur de paroi d'environ 0,5 millimètre.

11. Ensemble soufflet (400) selon l'une quelconque des revendications 7 à 10, dans lequel l'au moins une convolution (414) comprend en outre :
une quatrième partie de tube (436) espacée radialement de la troisième partie de tube (434),
une quatrième partie souple (437) formée entre et accouplant la quatrième partie de tube (436) à la deuxième extrémité (422) et à la troisième partie de tube (432),
une cinquième partie de tube (438) espacée radialement de la quatrième partie de tube (436) et s'étendant à l'opposé d'une troisième extrémité,
une cinquième partie souple (437) formée entre les quatrième et cinquième parties de tube et accouplant celles-ci.

12. Ensemble soufflet (500), comprenant :
une première partie de raccordement (510) ;
une deuxième partie de raccordement (512) espacée de la première partie de raccordement (510) le long d'un axe longitudinal (524) ; et
une partie de convolution à hélices (514) formée entre la première partie de raccordement (510) et la deuxième partie de raccordement (512) et conçue pour fournir une souplesse de sorte que la première partie de raccordement (510) se déplace par rapport à la deuxième partie de raccordement (512),
dans lequel la partie de convolution à hélices (514) s'étend circonférentiellement autour et le long de l'axe longitudinal (524) et présente une première section (632) avec un premier angle (640) par rapport à un axe latéral qui est perpendiculaire à l'axe longitudinal, **caractérisé en ce que** la convolution à hélices (514) comprend une deuxième section (634) s'étendant à partir de la première section (632), la deuxième section (634) présentant un deuxième angle (650) par rapport à l'axe latéral, le deuxième angle étant supérieur au premier angle.

13. Ensemble soufflet (500) selon la revendication 12, dans lequel la première section (632) a une première hauteur le long de l'axe longitudinal, la deuxième section (634) a une deuxième hauteur le long de l'axe longitudinal, et la première hauteur est supérieure à la deuxième hauteur, et/ou
dans lequel le premier angle est compris entre environ 10 degrés et environ 30 degrés, et le deuxième angle est compris entre environ 30 degrés et environ 60 degrés.

14. Ensemble soufflet (500), comprenant :
une première partie de raccordement (510) ;
une deuxième partie de raccordement (512) espacée de la première partie de raccordement le long d'un axe longitudinal (524) ; et
une partie de convolution à hélices (514) formée entre la première partie de raccordement (510) et la deuxième partie de raccordement (512) et conçue pour fournir une souplesse de sorte que la première partie de raccordement (510) se déplace par rapport à la deuxième partie de raccordement (512),
dans lequel la partie de convolution à hélices (514) est espacée de l'axe longitudinal (524) d'un rayon (530) et s'étend circonférentiellement autour de l'axe longitudinal tout en augmentant en hauteur le long de l'axe longitudinal de sorte que la partie de convolution à hélices s'étend selon un premier angle par rapport à un plan perpendiculaire à l'axe longitudinal ;
**caractérisé en ce qu'**une forme en section transversale de la convolution à hélices (514), dans le plan perpendiculaire à l'axe longitudinal (524), comprend :
une partie concave (560),
une partie convexe (570),
une partie de rayon externe (580) de la convolution à hélices (514),
une partie de rayon interne (582) de la convolution à hélices (514),
dans lequel la partie convexe (570) se trouve au niveau d'une partie en porte-à-faux (584) de la convolution à hélices (514) et s'étend à partir de la partie de rayon externe (580) vers l'intérieur en direction de la partie concave (560), et
la partie concave (560) s'étend vers l'intérieur en s'éloignant de la partie convexe (570) avec une courbure opposée à la partie convexe (570) et vers la partie de rayon interne (582).
